(19) Europäisches Patentamt
European Patent Office
Office européen des brevets

(11) Publication number: **0 171 485**
A2

(12) # EUROPEAN PATENT APPLICATION

(21) Application number: 84830110.7

(22) Date of filing: 11.04.84

(51) Int. Cl.⁴: **F 16 B 2/12**
F 16 B 7/04, F 16 B 5/06
E 04 G 7/16

(30) Priority: 22.04.83 IT 4815183
10.02.84 IT 4767884

(43) Date of publication of application:
19.02.86 Bulletin 86/8

(84) Designated Contracting States:
AT BE CH DE FR GB IT LI LU NL SE

(71) Applicant: Palamara, Rocco
Colle Palombara, 15
I-00039 Zagarolo (Roma)(IT)

(71) Applicant: Palamara, Giovanni
Colle Palombara, 15
I-00039 Zagarolo (Roma)(IT)

(71) Applicant: Palamara, Bruno
Colle Palombara, 15
I-00039 Zagarolo (Roma)(IT)

(72) Inventor: Palamara, Rocco
Colle Palombara, 15
I-00039 Zagarolo (Roma)(IT)

(72) Inventor: Palamara, Giovanni
Colle Palombara, 15
I-00039 Zagarolo (Roma)(IT)

(72) Inventor: Palamara, Bruno
Colle Palombara, 15
I-00039 Zagarolo (Roma)(IT)

(54) Elements for fixing parts of various shapes at various angles.

(57) The present invention refers to a group of elements for the realization of joints connecting and tightening two or more variously reciprocally oriented or orientable sections, whether tables, axes, laths, tubes or the like, variously oriented and orientable through the overlying association of at least two bodies, with coupling surfaces shaped to correspond to the surfaces of said sections to be joined, reciprocally fixed by at least one fixing and axial joint means, orthogonal to the directions in which each pair of sections is oriented; said joint means comprising two parts, associated respectively with said two bodies, complementarily fixable by means of a common bolt and allowing a continuous variability of the reciprocal angles between said bodies and a preestablished number of rigid angles between them, and so between the sections connected to them.

FIG.1

EP 0 171 485 A2

Group of elements for the realization of connecting
and tightening joints of two or more sections of any
shape, variously reciprocally oriented and orientable

Palamara, Rocco; Palamara, Giovanni; Palamara, Bruno

The present invention refers to a group of elements
for the realization of metallic or other joints for
connecting and fixing of two or more variously oriented
and orientable sections, whether tables, panels, axes,
laths, tubes or the like, which in this discussion
will be called "sections" for simplicity, achieving a
system with great applicative versatility and variability
of combinations of different elements able to realize
tightening junction for two, three or more sections
oriented in any direction and of any type.

Currently, erecting frames, scaffolding and shelving
(for interiors or exteriors), as well as the construction
of various structures, are done by using one of many
solutions for the joints, which have been devised
specifically for each particular application.

There are no known solutions of joints which, only
by varying the dimensions, proportions, materials
or simple conformations of the prehensile elements,
resolve all the connection situations possible.

0171485

Furthermore, in the current state of the art there is no type of joint which is at the same time suited for orthogonal joints and those at various angles, and also for joining two or more parallel laths(to lengthen them or to pair them for reinforcing). There is also no one joint which may be used for all types of tight seal joints.

Finally, there are no joints which are modular, that is, which can be taken apart and put together in combinations to resolve any necessity.

The aim of the present invention is to realize a group of elements which can be variously paired and combined to form connecting joints suitable for any requirement and which can overcome the inconveniences cited above, through the realization between two bodies in pressure contact of a single axial joint organ, orthogonal to the directions of orientation of each pair of connected sections.

Another aim of the invention is to realize a joint organ which can allow orientation of the bodies in pressure contact at any angle or at a predetermined number of rigid angles; another is to realize a joint organ which allows coupling of contact bodies with different pairing sections (for example, tubes and square laths, or tables with panels, etc.).

Another aim is to realize joint with a simple structure, easily and rapidly assembled and disassembled, with a single joint organ, in a simple maneuver, for each pair of connections. Finally, another aim is to realize a type of three directional joint which can be reduced to bidimensional when necessary, by simply removing (or not assembling) the superfluous and space-taking ·· prehensile part.

These and still other goals are achieved with the object of the invention which, in terms of the group of elements for the realization of connecting joints according to the invention as well as from a general point of view, is characterized by comprising at least two counterposed bodies bearing on at least one surface a coupling section with a flat, prismatic or cylindrical shape corresponding to the shape of the external surface of the section to be joined, equipped solidly with a fixing and reciprocal joint organ, arranged laterally or in correspondence with one end, developing axially and orthogonally to the direction of the sections to be joined, said organ comprising two reciprocally and mutually fixable and tightenable parts, each joined to one of said bodies, and one of said parts realizing internally and longitudinally a site fixing in a sliding fashion a complementary expansion joined to the other of the two parts of the joint organ, axially internally in turn containing

0171485

a threaded cavity fixing the equally t.readed end of a bolt held freely rotating in said site and connected to its head; said bolt, on screwing in said cavity, supplies the axial sliding contrary to said expansion in said site and consequently the fixing of said two parts of the joint organ and so of said bodies.

Other characteristics and advantages will be clearer from the following detailed description of a preferred, but non-limiting, emboddment, with reference to the attached drawings in which:

figure 1 shows an exploded view of the basic structure according to the invention;

figure 2 shows an applied example of the joint in figure 1;

figure 3 shows a detail of the realization of the organ joining the joints;

figure 4 shows another detail of the solution of the joint organ;

figure 5 shows an example of a realization of a joint with another particular realization of the joint organ;

figure 6 shows a solution of a joint for tubular elemnts with an intermediate element interposed;

figure 7 shows an example of combined application of two different prehensile bodies in one composite joint, for tables and laths;

figure 8 shows a joint like that in figure 1 with counterlever means;

figure 9 shows the combination of three bodies through two joint organs for connecting three sections oriented in different directions;

figure 10 shows another example of connection of three parallel sections;

figure 11 shows the same combination of elements in figure 9 for joining three tubular sections;

figure 12 shows an example of the application of joints as in figure 1 for the connection of three differently oriented sections;

figure 13 and 14 show two different solutions for the bodies of the joints in figure 1 and 6;

figure 15 shows an example of mixed application of a body as in figure 13 and one as in figure 1;

figure 16 shows another particular realization of the joints as in figure 1.

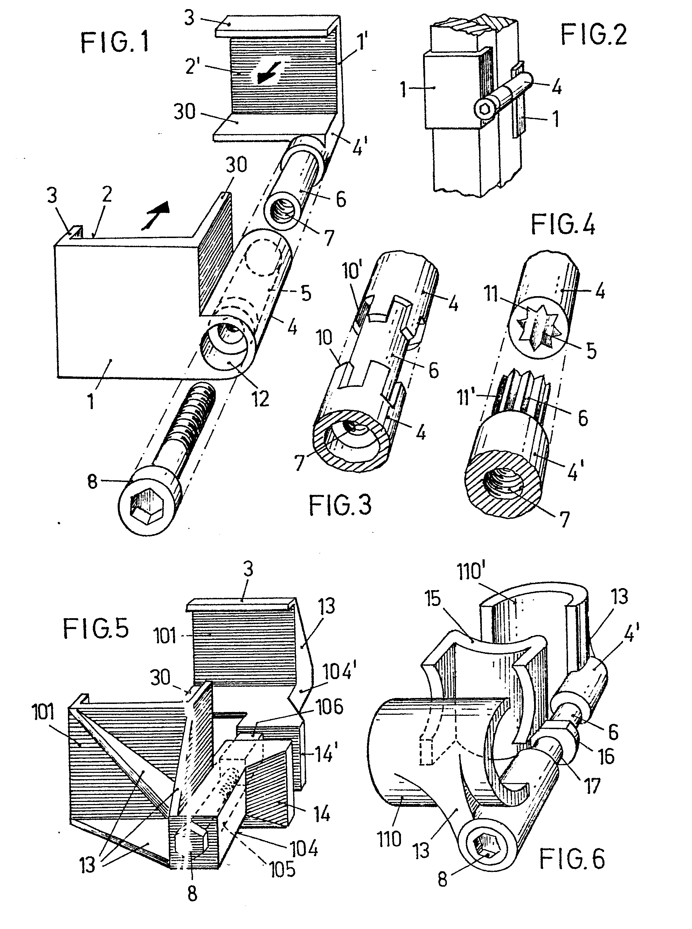

Withe reference to the attached drawings, figure 1 shows a joint according to the invention comprising two opposite bodies 1 and 1' with similar coupling surfaces 2 and 2' shaped according to flat sections and equipped with pairs of transverse slats 3 and 3Ø in correspondence with the two outer edges. In the conformation shown, said bodies 1 and 1' are particularly suited for pairing two sections of laths with a quandrangular section, and are laterally provided with two parts 4 and 4' joined to them to complementarily realize a fixing and joining organ.

Said part 4 of said organ has internally and longitudinally a site 5 fixing internally in a sliding fashion a complementary expansion 6, presented by the other part 4', axially in turn with a threaded cavity 7. A common bolt 8 fits freely rotating and axially sliding in said site 5 and is fixed by its complementary threading in said cavity 7. The screwing of bolt 8 into cavity 7 causes the sliding insertion of expansion 6 in site 5 and so the approach of the two opposite bodies 1 and 1', or rather the tightening of the sections or laths paired between them. The maximum limit of the reciprocal locking of the two parts 4 and 4' may be defined by a peripheral rise 9 delimiting said expansion 6 and coming against the corresponding end of said site 5.

In the solution shown in figure 1, both said site 5 and expansion 6 are complementarily cylindrical, and so said expansion is  xially sliding and freely rotating in site 5. This conformation allows a continuous range of reciprocal angles between the two bodies 1 and 1', before they are tightened, and so allows the joining of sections at any angle, from the orthogonal one in figure 1 to the parallel  one in figure 2.

Figure 3 shows a realization of the corresponding
ends of said parts 4 and 4' of the joint organ, which
are peripherally and circularly equipped with
complementary toothing 10 and 10' so as to define,
when reciprocally fixed, in the final phase of
tightening the two parts, a pre-established number
of rigid angles of the two opposite bodies 1 and 1'.

Figure 4 shows a realization similar to the preceding
one, in which both said site 5 and said expansion 6
are complementary and substantially cylindrical, and said
expansion has on its surface multiple axial edges
11 which are regularly circumferential and can be
fixed in complementary grooves 11' on the inner
surface of site 5. Both these realizations allow the
reciprocal angles between bodies 1 and 1' to be
held to a pre-established number, allowing for said
angles a rigid association of said two bodies.

In figure 1, and analogously for the realizations in
figure 3 and 4 as well as every other example
subsequently described, in correspondence to the
end of said site 5, opposite said hinging expansion 6,
there is an anular groove 12 in which the head of
bolt 8 fits , coaxial to said site 5, but separated
from it by a narrowing in which the shaft of bolt 8
can freely rotate but in which the head of the bolt
is fixed axially.

- 8 -

0171485

Figure 5 shows another example of the joint in figure 2 where the two bodies 101 and 101', with a pairing section of a different conformation that that of the previously described 1 and 1', are equipped on the surfaces opposite those involved in the joint with supporting and stiffening ribs 13 for support of the respective parts 104 and 104' of the joint organ. Furthermore, said parts are shaped according to another realization in which said site 105 and said expansion 106 have complementary quadrangular, or more generally ⌐ polygonal, sections, defining corresponding respective fixing angle and reciprocal sliding.

All realizations of bodies 1 and 1', 101 and 101', or others subsequently described, may be equipped with said ribs 13, as necessary for the sizes and forces the joints are destined to support. Analogously to the ribs 13, said parts 4 and 4' or 104 and 104' of the joint organ may be equipped with similar reinforcing ribs 14 and 14', in correspondence and matching against one another when tightened, so as to provide a further balancing and distribution of the forces incident on the joint organ.

In the following description of the other component elements of the group according to the invention and of the various conformations in which bodies 1 and 1' can be realized, the joint organ will be indicated generically meaning that realized from said parts 4 and 4', 104 and 104' as said parts are shaped as described and shown in figure 1, 3,,4 and 5.

Figure 6 shows a joint realized from two opposite bodies 110 and 110' with corresponding substantially cylindrical coupling profiles. If useful for the application necessities (separation of the sections to be joined, or greater surface required) at least one accessory element may be interposed comprising an intermediate body 15, with one or both of its opposite surfaces shaped according to coupling sections complementary to those realized on the bodies (in figure 6, bodies 110 and 110') respectively placed according to their pre-established reciprocal angle. Said intermediate body or bodies 15 can be connected to said organ joint be means of a slat 16 with an opening 17 shaped like the cross section of said expansion 6 and fixable to the latter by means of the fixing of the two parts 4 and 4', or 104 and 104', of the joint organ itself.

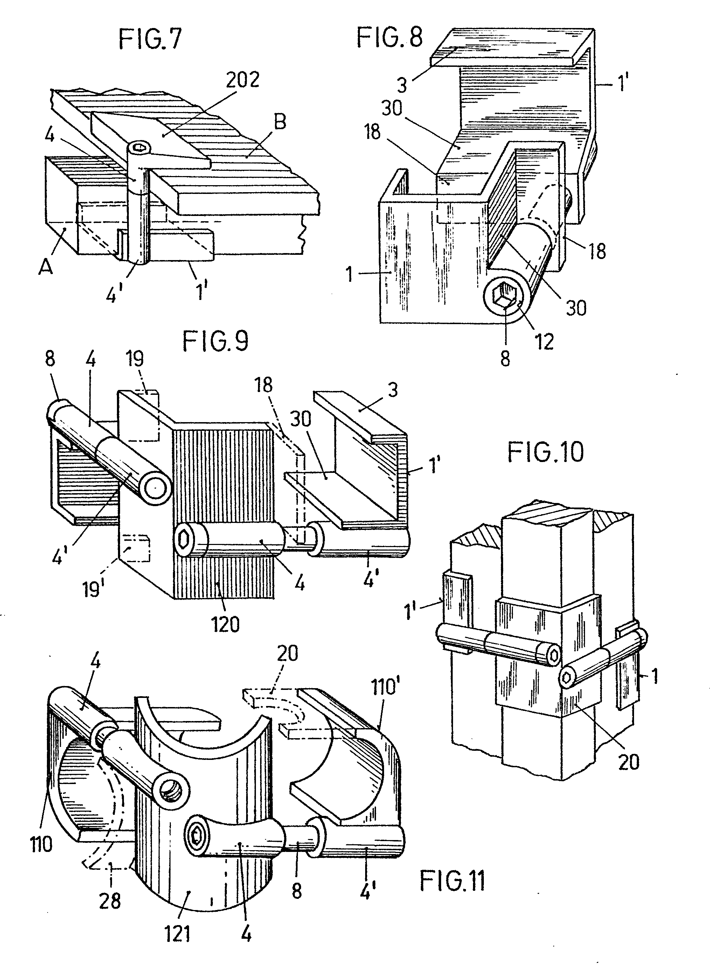

Figure 7 shows a c mbined joint, with the combination of two opposite bodies with different coupling surfaces held together by the same mutually formed joint organ (4 and 4' in the figure), and joining a lath A with a flat table B (or a panel); one of the two bodies is of conformation 1', and the other, holding the panel, is similar except for the lack
of wing 3. This second body with no wing 3 wil
indicated as 201, and its corresponding body according
to the invention with 201'.

Figure 8 shows a joint composed of two opposite
bodies 1 and 1' further equipped with counterforce
planes 18, each consisting of a lateral development
which starting from the side edge of said wing 30 (of
a suitable length) develops from the axis, bordering
the section already held by the profile of the
respective other body, against which it is fixed
superficially upon tightening, to contribute to the
hold of the latter and above all comprising a counter
l ver to the draw of the joint organ in some of its
uses.

Figure 9 shows the combination of the two bodies 1 and
1' as described in figure 1 with a third body 12∅, in
correspondence with two of its sides with the
respective parts 4 or 4' (or 104 or 104', etc.) of
said joint organs. Both said parts may realize said
site 5, or both may realize said expansion 6, or one
and the other. The coupling surface of said body 120 is
of course shaped so as to be complementary to each of
the two bodies 1 and 1', which naturally have respective
complementary parts of the joint organs; said surface
may be combinable, as shown, to obtain a joint connecting three sections oriented or orientable in different directions. This joint, in addition to being suited for having other joints on its axes, may also be reduced to a simple double joint by simply removing (or not assembling) one of said bodies 1 and 1'. Therefore, the central body 120 can have, on at least one of its edges, angular containment ridges 19 and 19' (dashed line in the figure) so as to hold on the side of the missing body the section placed in body 120. Also shown with a dashed line in the figure is a counterforce means 18 which may also be provided on body 120 for the reasons discussed for figure 8; this means 18 may also be equipped with further ridges, to hold the crosswise lath.

Figure 10 shows an example of the combination of bodies 1, 1' and 120 able to connect and tighten three quadrangular sections in parallel.

Figure 11 shows a third body 121 d fining two said joint organs, similar to 12Ø described above, with a pairing surface shaped according to cylindrical profiles corresponding to two bodies 110 and 110' put together for joining three variously oriented tubular elements. Figure 11 also shows with a dashed line the possibility of equipping one or more of said bodies, in correspondence with at least one of their external edges, with slats or cuffs shaped so as to grasp and hold more effectively the sections to be joined to the coupling surfaces of said bodies; another dashed line in the figure, visible under one of the axes, shows a counterforce edging 28, which can be wound      and thus hold    the cross tubular element at a rigid angle. In any case, the cylindrical bodies 110, 110' and 121 may also have flat counterforce edging 18 which does not constrain the joint angle to particular values.

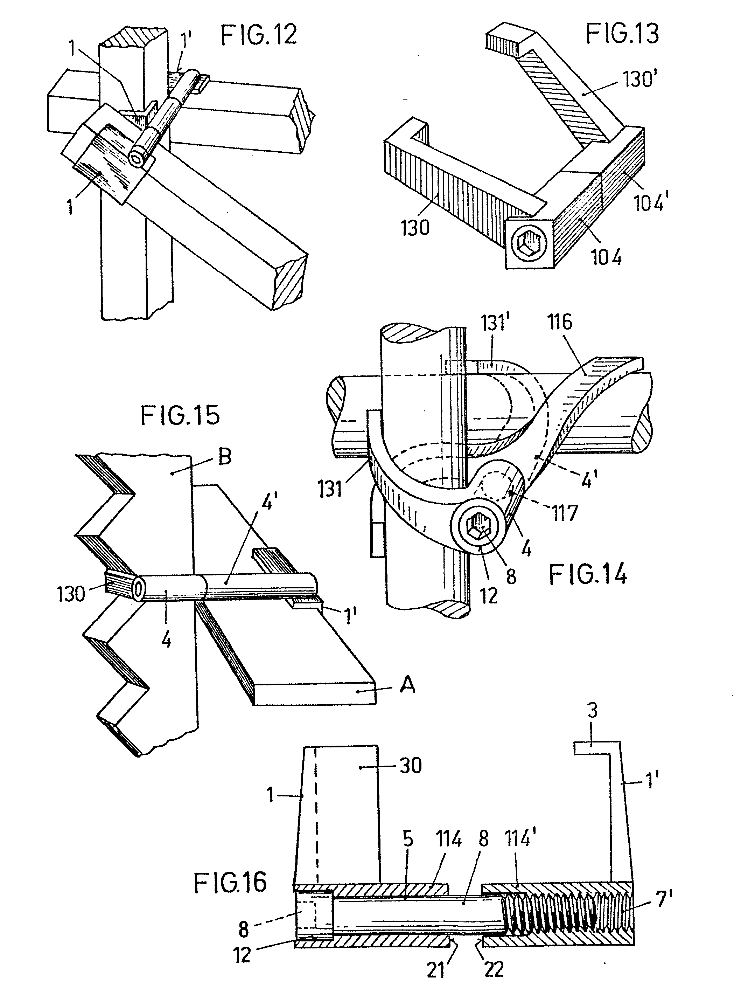

Figure 12 shows a particular joint for three sections oriented at different angles, made with two bodies held opposite to one another by a suitable intermediate body 15, or, as shown in figure 8, by placing another body 1 in between, with no part 4 in the joint organ whose site 5 is used as an intermediate to space site 5 and expansion 6 of the two external opposite bodies, and by using a longer bolt.

Figures 13 and 14 show two different realizations of the joint for polygonal and tubular sections, respectively, in which the opposite bodies 130, 130' and 131, 131' are realized by flat or curved bars with quadrangular sections, developing orthogonally or diagonally to a joint organ realized by said parts 4 and 4' or 104 and 104'. In figure 14, an intermediate body 115 is provided between the two bodies 131 and 131', made of a slightly curved bar, in the case of approximately helical development, in which the opening 117 to hold the body itself to the-joint organ is realized approximately central to the body itself. The joints realized as illustrated in figures 13 and 14 are particularly suited for joining small surfaces, or also for cases requiring incisive pressure on a small area.

Figure 15 shows another example of combinations based on joints between different sections, suitably provided by the invention. In this example, the opposite bodies forming the joint are one, similar to that in figure 1 suitably lengthened on its axis so to cover the width of table A, and the other, 130 (or 130') suitable for joints in small areas, covering an unusual section B.

Finally, figure 16 shows a joint comprising two opposite bodies 1 and 1' whose respective parts 114 and 114' of the joint organ form said site  5 and said threaded cavity  7. Said parts are reciprocally fixed by said bolt 8 i  site  5 and fixed by screwing into cavity  7. Said parts 114 and 114' have corresponding surfaces 21 and 22 (possibly equipped with said toothing 10 and 10') defining the limit of reciprocal approach, and the surface of reciprocal contact for screwing bolt 8, which in this case with its shaft comprises the resistant bearing axis supporting the two parts. This simple axis solution is particularly indicated for the requirements of small size joints or those particularly destined for various different combinations. This application is of course provided also on said bodies 101 and 101', 110 and 110', 120, 121, 130 and 131' and in any case on any other variant according to the invention.

Finally, all the coupling surfaces of the various bodies forming the various types of joints described may be equipped with rivets or ribbing or edging (not shown in the tables for the sake of simplicity) developed longitudinally or transversely, to increase and improve the adhesion and holding capacity of the bodies themselves on the surfaces of the section to be joined.

The structural characteristics of the component elements of the group according to the invention, in particular of the joint organ with structure as shown in figures 1, 3, 4, 5 and 15, allow a wide variety of reciprocal association combinations of said bodies 1 and 1', 101 and 101', 110 and 110', 201 and 201', 120 and 121, 130 and 130', 131 and 131', with flat, prismatic or cylindrical coupling profiles, even mixed with one another, for joining different sections, for example laths with tubes, tables with laths, large cross sections with small cross sections, etc., with only paying attention to the combination of said bodies, through respective said parts 4 and 4', 104 and 104', or 114 and 114' of the joint organ, which must of course be complementary. Naturally this variability of combinations involves the requirement for the same number of said intermediate bodies 15 with respective opposite coupling profiles conforming to said possible combinations.

The above description shows how the realization of a group of elemhts comprising bodies 1, 1', 101, 101', 110, 110', 130, 130', 131, 131', 201n 201' opposite one another, with intermediate bodies 15 and 115 or with multiple connections 120 and 121, with suitably shaped coupling surfaces and various combinations of the various said elements, achieves the aims proposed.

Naturally, the above description is only an example of a preferred but not exclusive embodiment, and the multiple variations in execution are in any case covered by the present invention.

Claims

1. Group of elements for the realization of connecting and tightening joints for two or more variously reciprocally oriented and orientable sections of any cross section, of the surface coupling type at any point of any section, such as tables, laths, tubes and the like, characterized by comprising at least two counterposed bodies 1 and 1', 101 and 101', 110 and 110', bearing on at least one surface a coupling section with a flat, prismatic or cylindrical shape corresponding to the shape of the external surface of the section to be joined, equipped solidly with reciprocal fixing and joint organ, arranged laterally in correspondence with one end, developing axially and orthogonally in the direction of the sections to be joined, said organ comprising two reciprocally and mutually fixable and tightenable parts, 4 and 4', 104 and 104' each joined to one of said bodies, and one of said parts 4 or 104 realizing internally and longitudinally a site 5 fixing in a sliding fashion a complementary expansion 6 joined to the other of the two parts 4' of the joint organ, axially internally in turn containing a threaded cavity 7 fixing the equally threaded end of a bolt 8 held freely rotating in said site 5 and connected to its head; said bolt 8, or screwing in said cavity 7, supplying the axial sliding contrary to said expansion 6 in said site 5 and consequently the fixing and tightening of said two parts 4 and 4' of the joint organ and so of said bodies.

2. Group of elements for the realization of joints according to claim 1 characterized by the fact that said site 5 and said expansion 6 have complementary cylindrical development, said expansion 6 resulting axially sliding and rotating in said site 5.

3. Group of elements for the realization of joints according to claim 1 wherein the corresponding ends of said parts 4 and 4' of the joint organ are peripherally and circularly equipped with at least one pair of complementary toothing 10 and 10' rigidly defining when the two parts are tightened in the final phase the final reciprocal angle of said opposite bodies 1 and 1' and so of the respective sections being joined.

4. Group of elements for the realization of joints according to claim 1 wherein said site 5 and said expansion 6 are substantially cylindrical, and said expansion has on its surface multiple axial edges

11 fixed but axially sliding in complementary grooves 11' on the inner surface of site 5; said complementary edges and grooves 11 and 11' define an equal number of rigid angles in which said two parts 4 and 4' of the joint organ are reciprocally held and sliding.

5. Group of elements for the realization of joints according to claim 1 wherein said site 105 and said expansion 106 have complementary quadrangular or polygonal sections, defining corresponding rigid angles of fixing and reciprocal sliding of the two bodies 104 and 104' joined to them.

6. Group of elements for the realization of joints according to claims 1 and 3, characterized by the fact that said two parts 114 and 114' of the joint organ present, respectively, said site 5 and said threaded cavity 7, which are fixed reciprocally by said bolt 8 in said site and fixed by screwing into said cavity; said site 5 and said cavity 7 have corresponding surfaces with shoulders 21 and 22 or with graduated grooves with said toothing 10 and 10', defining the limit of reciprocal approach for screwing said bolt.

7. Group of elements for the realization of joints according to claims 1 and 6 characterized by the fact that said site 5 (105) has in correspondence with the end opposite that fixing said expansion 6 (106), or said shoulder 21 or toothing 10, an anular groove 12 corresponding coaxially to side site, in which the shaft of said bolt 8 freely rotates while its head is fixed axially in it.

8. Group of elements for the realization of joints according to claims 1 and 6 for joining three or more (or even only two) equally or differently oriented sections, characterized by the fact that at least one of said bodies 120 or 121 is equipped, in correspondence with two contiguous sides or ends of the respective parts 4/4',104/104',114/114' of said joint organs, both forming said site 5 or said expansion 6, or one and the other; said body 120 and 121' may be associated with bodies 1 and 1', or 110 and 110', equipped with complementary parts of the respective joint organs; said body 120 and 121 has a surface coupling profile shaped like the complementary profiles of said other bodies associated with it.

9. Group of elements for the realization of joints according to claim 1 and one of the realizations of the joint organ according to claims 2, 3, 4, 5 and 6, characterized by the fact that placed between said two bodies 1 and 1', 101 and 101', 110 and 110', 202 and 202',or between on of said bodies and any one of said bodies 120 and 121 there is at least one intermediate body with one or both of its opposite surfaces shaped according to coupling sections complementary to those realized on the bodies respectively placed according to the established joint angle of the two bodies connected by said joint organ; said intermediate body 15 is connected to said joint organ by means of a slat 16 with an opening 17 shaped like the cross section of said expansion 6 and fixable to the latter by means of the fixing of the two parts of the joint organ itself.

10 Group of elements for the realization of joints according to claims 1, 6 and 7, characterized by the fact that said counterplaced bodies 130 and 130', 131 and 131', and said intermediate body 115, are realized with flat or curved bars with quadrangular sections, developing orthogonally or diagonally to said joint organ made of said parts 4 and 4', 104 and 104', 114 and 114'.

11. Group of elements for the realization of joints according to the preceding claims where the surfaces facing one another of said bodies are shaped like the coupling profiles with flat,

- 6 -

0171485

prismatic or cylindrical development, characterized
by the fact that said profiles are equipped, in
correspondence with at least one of the respective
external edges, with bars 3, 30 or cuffs 20 to
hold said profiles to the surfaces of the sections
to be joined.

12. Group of elements for the realization of joints
according to the preceding claims where the
surfaces facing one another of said bodies are
equipped, in correspondence with at least one of
the respective edges facing said coupling profiles
and on the side of at least one of said bars 30,
with a counterforce plane 18 adjacent to said
parts 4,4', 104,104', 114,114' and developing
laterally and orthogonally from them, so that
said plane is in contact as a shoulder with
the section held by the profile of said
contiguous body; said plane can fix said
section in contact with it with its shaped
profile 28.

13. Group of elements for the realization of joints
according to the preceding claims, characterized
by the fact that said parts 4 and 4', 104 and 104'.
and 114 and 114' of the joint organs are joined to
said bodies by means of supporting ribs 13 and
said parts have between them complementary stiffening relief 14 and 14' to balance the forces which are generated on the surface in the tightening phase.

14. Group of elements for the realization of joints according to the preceding claims, characterized by the fact that said surfaces shaped according to coupling profiles with flat, prismatic or cylindrical develpment have longitudinal and/or transverse ribs or edges or rivets to increase their adhesion and holding capacity for the sections to be joined.

15. Structure with laths and/or beams and/or tables and/or panels and/or sections and/or tubing where the means for connecting and tightening together said, or similar, materials in any positions to one another are achieved by the combination of two or more elements according to the preceding claims.

FIG.1

FIG.2

FIG.4

FIG.3

FIG.5

FIG.6

FIG.7

FIG.8

FIG.9

FIG.10

FIG.11

FIG.12

FIG.13

FIG.15

FIG.14

FIG.16